# FASCICULE DE BREVET EUROPEEN

(11) **EP 1 199 832 B1**
(45) Date de publication et mention de la délivrance du brevet: **01.04.2009**
(21) Numéro de dépôt: 01402726.2
(22) Date de dépôt: 19.10.2001
(51) Int. Cl.: H04L 1/16, H04L 1/18, H04L 12/56

(54) **Procédé de transmission sécurisé évitant les retransmission inutiles**
Übertragungsverfahren zur Vermeidung von zwecklosen wiederholten Übertragungen
Transmission procedure to avoid useless retransmissions

(30) Priorité: 20.10.2000 FR 0013481
(43) Date de publication de la demande: 24.04.2002
(73) Titulaire: Alcatel Lucent, 75008 Paris (FR)
(72) Inventeur: Agin, Pascal, 94370 Sucy en Brie (FR); Bourdeaut, Stanislas, 75015 Paris (FR)
(74) Mandataire: El Manouni, Josiane

(56) Documents cités:
- COHEN R: "AN IMPROVED SSCOP-LIKE SCHEME FOR AVOIDING UNNECESSARY RETRANSMISSIONS AND ACHIEVING IDEAL THROUGHPUT" FIFTEENTH ANNUAL JOINT CONFERENCE OF THE IEEE COMPUTER AND COMMUNICATIONS SOCIETIES. NETWORKING THE NEXT GENERATION. SAN FRANCISCO, MAR. 24 - 28, 1996,LOS ALAMITOS, IEEE COMP. SOC. PRESS,US, vol. CONF. 15, 24 mars 1996 (1996-03-24), pages 855-862, XP000621354 ISBN: 0-8186-7293-5

## Description

La présente invention concerne le domaine des communications, en particulier des radiocommunications dans un réseau relié à une pluralité de stations mobiles ou portables (MS), et a pour objet un procédé de transmission sécurisé, notamment en voie descendante, évitant les retransmissions inutiles.

Dans la présente, le terme "montant" est utilisé pour désigner une liaison, une transmission ou un canal de transmission d'un ou de plusieurs terminaux mobiles vers le réseau ("uplink") et le terme "descendant" pour désigner une liaison, une transmission ou un canal de transmission du réseau (ou d'une station de base de ce dernier) vers un ou plusieurs mobiles qui lui sont affiliés ("downlink").

Dans les systèmes de communications sans fil, des erreurs peuvent apparaître lors de l'estimation ou de l'évaluation des bits de données dans le récepteur. Ces erreurs sont principalement dues à la distorsion du signal transmis provoquée par le canal multitrajet, le bruit thermique et toutes les sources d'interférence. Ainsi, pour pouvoir récupérer tous les bits d'information, une certaine redondance est habituellement ajoutée, c'est-à-dire que plus d'un bit est transmis par bit d'information. Cette technique est appelée codage de canal et la quantité de redondance, définie comme étant le rapport entre le nombre de bits d'information et le nombre de bits transmis est appelée taux de codage (le taux de codage est exprimé par un nombre entre 0 et 1).

Pour la transmission de données par paquets, tous les bits d'information doivent être reçus correctement. Cependant, même pour un très faible taux de codage et des puissances d'émission élevées, des erreurs sont toujours possibles dans le récepteur dans des conditions de radio transmission difficiles. De ce fait, une autre technique, appelée ARQ (demande de répétition automatique) est mise en oeuvre de manière additionnelle. Elle consiste simplement à retransmettre tous les blocs de bits d'information qui sont détectés comme étant erronés dans le récepteur jusqu'à ce qu'ils soient reçus correctement. La proportion des blocs qui sont retransmis est appelée taux d'effacement de bloc (BLER) et dépend significativement du taux de codage (le BLER est une fonction croissante du taux de codage).

Dans les systèmes dits GPRS (pour "General Packet Radio Service") et EGPRS (pour "Enhanced General Packet Radio Service"), les procédures de retransmission sont gérées par la couche RLC (contrôle de lien radio). Les procédures de liaison ou transmission montante et de liaison ou transmission descendante sont les suivantes :
- Liaison descendante : lorsque le réseau souhaite que la station mobile MS accuse réception des blocs transmis par le réseau en liaison descendante, le réseau interroge la station mobile MS, c'est-à-dire établit ou valide le bit "S/P" (S/P = supplémentaire/interrogation) de l'en-tête MAC (protocole de commande d'accès au support) à 1 (interrogation ou demande d'accusé de réception).
   Ensuite, la station MS envoie un message dit "Packet Downlink Ack/Nack" (accusé de réception positif/négatif de liaison descendante de paquet) au réseau pour accuser réception (positivement ou négativement) de tous les blocs entre le bloc le plus ancien non reçu et le dernier bloc correctement reçu.
- Liaison montante : le réseau accuse réception des blocs transmis par la station mobile en liaison montante avec un message "Ack/Nack de liaison montante de paquet" émis dans la liaison descendante.

Pour gérer la retransmission, l'émetteur conserve deux numéros de blocs en mémoire, à savoir :
- V(A) : numéro de bloc du bloc transmis le plus ancien n'ayant pas fait l'objet d'un accusé de réception positif,
- V(S) : numéro de bloc du bloc de données RLC suivant devant être transmis en séquence (c'est-à-dire le numéro du premier bloc qui n'a jamais été encore transmis). Ce numéro est incrémenté de 1 lorsque le numéro de bloc V(S) est transmis,
de même que l'état (avec réception d'accusé de réception positif, avec réception d'accusé de réception négatif, ou en attente) de tous les blocs ayant des numéros entre V(A) et V(S). L'état d'attente indique que le bloc a été transmis et attend de recevoir un accusé de réception (positif ou négatif). L'état avec accusé de réception positif indique que le bloc a déjà été reçu correctement par la station mobile et l'état avec accusé de réception négatif indique que le bloc a besoin d'être retransmis.

L'émetteur transmet toujours le bloc ayant le numéro de bloc le plus faible et l'état "accusé de réception négatif' ou "non encore transmis".

Le récepteur conserve également deux autres numéros, à savoir :
- V(Q) : le numéro de bloc le plus faible non encore reçu,
- V(R) : une valeur supérieure d'une unité au numéro de bloc reçu correctement le plus élevé, de même que l'état (blocs avec accusé de réception positif ou avec accusé de réception négatif) de tous les blocs ayant des numéros entre V(Q) et V(R).

Pour chaque bloc de données RLC, la séquence de contrôle de bloc (BCS) est une séquence de bits qui permet de détecter la présence ou l'absence d'erreurs, laquelle est incluse dans l'en-tête RLC (et est donc transmise avec chaque bloc de données RLC). Les blocs reçus détectés avec des erreurs reçoivent un accusé de réception négatif du récepteur et sont donc retransmis. Il peut aussi être prévu, dans le cadre de la présente invention, de mettre en oeuvre une autre méthode de détection d'erreurs.

Dans un message "Ack/Nack de liaison descendante de paquet" ou "Ack/Nack de liaison montante de paquet", le récepteur accuse réception de tous les blocs ayant un numéro N tel que V(Q) ≤ N < V(R).

La description détaillée des éléments évoqués ci-dessus (V(A), V(S), ...) peut être trouvée dans le standard GSM 04.60 (version 8.2.0) clause 9.1.

Dans chaque message "Ack/Nack de liaison descendante de paquet" ou "Ack/Nack de liaison montante de paquet", un tableau de bits est communiqué et indique si les blocs ayant des numéros entre V(Q) et V(R) ont reçu un accusé de réception positif (ACK) ou négatif (NACK). A partir de ce tableau de bits signalé, l'émetteur peut mettre à jour V(A), V(S) et l'état de tous les blocs en attente.

Avec une telle procédure, il peut arriver qu'un bloc soit considéré comme ayant reçu un accusé de réception négatif alors qu'il n'a pas été encore reçu (et sera donc retransmis alors que cela pourrait ne pas être nécessaire). Cette incohérence de fonctionnement apparaîtra plus clairement en l'illustrant par l'exemple suivant :
- Une liaison descendante TBF (pour "Temporary Block Flow" : flux temporaire par blocs) est établie. V(A), V(S), V(Q) et V(R) sont initialisés à 0 et le numéro du bloc suivant à émettre est établi à 0.
- Le réseau transmet les blocs 0, 1, 2, 3, 4 et 5. V(A)=0 et V(S)=5. Dans le bloc 5, le réseau interroge la station mobile MS (demande d'accusé de réception P0).
- Le réseau transmet les blocs 6, 7, 8, 9, 10 et 11. V(A)=0 et V(S)=11. Dans le bloc 11, le réseau interroge la station mobile MS (demande d'accusé de réception P1).
- Le réseau reçoit le "message Ack/Nack de liaison descendante de paquet" correspondant à la demande d'accusé de réception P0. Dans ce message, les blocs 2, 3 et 4 ont des accusés de réception négatifs (NACK) et les blocs 0, 1 et 5 ont des accusés de réception positifs (ACK). Juste avant d'émettre ce message, dans le récepteur, V(Q)=2 et V(R)=6. Après la réception de ce message, dans l'émetteur, V(A)=2 et V(S)=11.
- Le réseau transmet les blocs 2, 3, 4 (retransmission) suivis des blocs 12, 13, 14 (première transmission). V(A)=2 et V(S)=14.
- Le réseau reçoit le "message Ack/Nack de liaison descendante de paquet" correspondant à la seconde demande d'accusé de réception (demande d'accusé de réception P1). Dans ce message, les blocs 2, 3, 4 ont des accusés de réception négatifs NACK et les blocs 5, 6, ..., 11 ont des accusés de réception positifs ACK. Juste avant d'émettre ce message, dans le récepteur, V(Q)=2 et V(R)=11.
   Le réseau considère que les blocs actuellement en attente 2, 3 et 4 n'ont pas été correctement reçus.
- Le réseau retransmet les blocs 2, 3, 4.
- etc...

Lorsqu'il est interrogé pour la seconde fois (demande d'accusé de réception P1), le mobile n'a pas encore reçu la seconde transmission des blocs 2, 3, 4 du fait que ces blocs n'ont pas été encore retransmis (cette retransmission a lieu après la demande d'accusé de réception P1). Comme V(Q)=2, la station mobile accuse cependant réception négativement de ces trois blocs dans le message "Ack/Nack de liaison descendante de paquet" consécutif à la demande d'accusé de réception P1.

Lorsque le réseau reçoit ce second message "Ack/Nack de liaison descendante de paquet", il a déjà retransmis les blocs 2, 3 et 4 qui sont dans un état d'attente. De ce fait, il considérera que ces trois blocs n'ont pas été correctement reçus par la station mobile et les retransmettra une seconde fois (troisième transmission de ces blocs), alors que ces trois blocs en cours de transmission (seconde transmission) peuvent être reçus correctement immédiatement après. De même si les seconds blocs transmis 2, 3 et 4 ne sont pas reçus correctement, ils seront transmis une 4^{ème} fois, voire d'avantage... De ce fait, ces blocs seront transmis au moins une fois de plus que nécessaire.

Il ressort de ce qui précède qu'il existe bien un besoin pour une solution permettant d'éviter ou de surmonter le problème précité dans les stations mobiles MS et dans les stations de base BTS (pour chaque sens de liaison) formant le réseau, entraînant un gaspillage de certaines ressources radio et provoquant des erreurs dans la procédure d'accusé de réception.

Dans la liaison ou la transmission montante (les blocs sont émis par la station MS et font l'objet d'un accusé de réception par le réseau), la solution décrite ci-dessous a été proposée et standardisée (voir à ce sujet le standard GSM 04.60), dans le contexte des protocoles GPRS et EGPRS.

A chaque bloc de données RLC, est associée une temporisation T3198 et lorsque le bloc de données RLC est transmis, cette temporisation est initialisée à BS_CV_MAX périodes de blocs (paramètre diffusé avec d'autres informations du système dans chaque cellule, présentant une valeur entre 0 et 15). Dans les protocoles GPRS et EGPRS, la période de bloc radio est de 20 ms.

Lors de la réception d'un message "Ack/Nack de liaison montante de paquet", la station MS met à jour l'état d'un bloc en attente uniquement si la temporisation a déjà expiré (c'est-à-dire si au moins BS_CV_MAX périodes de blocs ont été passées depuis que le bloc a été transmis). En réalité, si la temporisation n'a pas encore expiré, ceci signifie que le "bloc de données RLC a été récemment transmis ou retransmis et ne peut pas donc recevoir un accusé de réception négatif d'une manière valide dans ce message Ack/Nack de paquet particulier" (voir standard GSM 04.60 clause 9.1.8.1).

La solution précitée, qui a été proposée et acceptée pour la transmission montante, pourrait également être implémentée en transmission descendante.

Néanmoins, cette solution existante n'est pas entièrement satisfaisante et présente certaines limitations.

Ainsi, il est très délicat de trouver une valeur optimale pour le paramètre BS_CV_MAX.

En effet, si cette valeur est trop grande, il existe un risque que l'état d'un bloc dans le message d'accusé de réception ("Ack/Nack de paquet") ne soit pas pris en compte alors qu'il devrait l'être.

Par contre, si cette valeur est trop faible, les cas de retransmission inutile, seront plus fréquents, entraînant à nouveau un gaspillage de ressources radio.

Par ailleurs, l'application de cette solution existante n'entraîne qu'une diminution de la probabilité de retransmettre un bloc lorsque le récepteur ne l'a pas encore reçu (correctement ou non) et non pas la résolution du problème en tant que tel, c'est-à-dire la suppression de toute retransmission inutile.

Le document COHEN R: »AN IMPROVED SSCOP-LIKE SCHEME FOR AVOIDING UNNECESSARY RETRANSMISSIONS AND ACHIEVING IDEAL THROUGHPUT » FIFTEENTH ANNUAL JOINT CONFERENCE OF THE IEEE COMPUTER AND COMMUNICATIONS SOCIETIES, NETWORKING THE NEXT GENERATION SAN FRANCISCO, MAR. 24-28, 1996, LOS ALAMITOS, IEEE COMP.SOC.PRESS.US, vol, CONF. 15, 24 mars 1996 (1996-03-24), pages 855-862, XP000621354 ISBN: 0-8186-7293-5, décrit un réseau ATM dans lequel un récepteur peut informer un émetteur de numéros de séquence de trames « I-frames » perdues au moyen de trames « STAT frames ». L'émetteur interroge périodiquement le récepteur pour déterminer s'il y a un saut dans la séquence de trames reçues avec succès. L'émetteur utilise une table locale afin d'associer à chaque « I-frame » le numéro de séquence de POLL envoyé avant la dernière transmission de cette « I-frame ». Chaque STAT contient le numéro de séquence de POLL auquel il répond. En comparant le numéro de séquence de STAT au numéro de séquence de dernier POLL envoyé associé a chaque « I-frame » pour laquelle une retransmission est requise par STAT, l'émetteur peut déterminer s'il faut retransmettre la « I-frame » ou ignorer la requête. Plus spécifiquement, si le numéro de séquence POLL associé la dernière transmission de « I-frame » est plus grand que le numéro de séquence POLL auquel le STAT reçu répond, l'émetteur déduit que le STAT a été envoyé comme réponse un POLL qui a été envoyé avant la dernière transmission de « I-frame », donc la requête de retransmission devrait être ignorée.

La présente invention a pour but de pallier ces inconvénients et limitations de la solution existante, en transmission ou liaison descendante ou montante, plus particulièrement dans des réseaux de radiocommunication du type GPRS, EGPRS ou autre.

A cet effet, la présente invention a pour objet un procédé de transmission de données par paquets entre au moins deux entités par l'intermédiaire de trames comprenant un ou plusieurs bloc(s) de données, procédé dans lequel, au cours d'une transmission, l'entité émettrice adresse de manière répétée à la ou à chacune des entités réceptrices des demandes d'accusés de réception ("polling" en anglais) et retransmet, après réception par elle de la part d'une entité réceptrice d'un message d'indication de réception ou de non réception des différents blocs transmis précédemment par l'entité émettrice vers cette entité réceptrice, le ou les blocs dont la réception n'a pas été confirmée par ledit message, éventuellement ensemble avec de nouveaux blocs transmis pour la première fois, ces opérations étant répétées tout au long de chaque séquence de transmission et à chaque bloc transmis étant associé un champ d'indication de son état en réception, à savoir réception confirmée, réception non confirmée ou en attente de confirmation.

Ce procédé est caractérisé en ce qu'à chaque bloc de données transmis par l'entité émettrice vers une entité réceptrice considérée est associée, en outre, une référence de demande d'accusé de réception et en ce que le champ d'indication de l'état en réception d'un bloc transmis donné n'est autorisé à être modifié, après réception d'un message d'indication de réception ou de non réception, que si la demande d'accusé de réception correspondante a été émise après la transmission ou retransmission du bloc considéré.

Conformément à un mode de réalisation préféré de l'invention, l'entité émettrice est constituée par un réseau de radiocommunication et la ou les entité(s) réceptrice(s) est (sont) constituée(s) par un(e) ou plusieurs station(s) mobile(s) ou récepteur(s) portable(s).

Dans ce qui suit, l'invention sera décrite plus particulièrement dans un contexte de transmission sur la voie descendante en relation avec le mode de réalisation préféré précité, tout en pouvant s'appliquer plus généralement, comme le comprendra aisément l'homme du métier à la lecture de ce qui suit, aux transmissions entre plusieurs entités, certaines émettrices (réseau ou terminaux mobiles) et d'autres réceptrices (terminaux mobiles ou réseau), ce dans l'une quelconque ou dans les deux directions de transmission entre ces entités.

Pour faciliter la gestion des demandes d'accusés de réception adressées par le réseau et l'exploitation des informations transmises en retour par la ou les stations mobiles, il est avantageusement prévu de constituer, au niveau du réseau, d'une part, un tableau d'état indiquant pour chaque bloc transmis son numéro de séquence ou sa référence, son état en réception et une référence de demande d'accusé de réception et, d'autre part, une table de correspondance entre lesdites références de demandes d'accusés de réception et les messages d'indication de réception ou de non réception.

Conformément à un mode de réalisation préféré de l'invention, chaque référence de demande d'accusé de réception, particulière à chaque station mobile ou commune à toutes les stations mobiles en communication, consiste en une variable numérique indiquant le numéro de la prochaine demande d'accusé de réception, ladite variable numérique étant initialisée en début de chaque séquence de transmission par blocs et incrémentée d'une unité après chaque nouvelle demande d'accusé de réception émise par le réseau.

Dans ce cas, le procédé consiste plus précisément, après chaque réception par le réseau d'un message d'indication de l'état de réception des blocs transmis émis par une station mobile donnée, à déterminer pour ledit message (à partir d'un tableau) le numéro de la demande d'accusé de réception correspondante émise par le réseau, puis à comparer ledit numéro extrait aux numéros des demandes d'accusés de réception pour les blocs transmis dont l'état est mémorisé dans le tableau d'état et, à modifier, le cas échéant, uniquement les champs d'état des blocs dont le numéro de demande d'accusé de réception est supérieur ou égal audit numéro extrait.

Pour faciliter le traitement et limiter les besoins en espace mémoire, le champ réservé à la variable numérique contenant le numéro de demande d'accusé de réception comprend un nombre restreint n de bits, et avantageusement une taille très faible par rapport au nombre maximal de demandes d'accusés de réception émises pendant une séquence de transmission par blocs, la comparaison entre le numéro extrait d'un message d'indication de l'état de réception et les numéros de demandes d'accusés de réception stockés dans le tableau d'état consistant en une comparaison modulo n.

A titre d'exemple de réalisation pratique, mais non limitative, de l'invention, il sera procédé ci-après à la description d'une implémentation du procédé selon l'invention dans des réseaux de radiocommunication du type GPRS et EGPRS.

Le principe à la base de l'invention consiste à numéroter toutes les demandes d'accusés de réception et ajouter un champ au tableau qui donne l'état de tous les blocs de données RLC transmis, de sorte que pour chaque bloc de cette liste (désigné par V(B) dans le standard, GSM 04.60 clause 9.1.3), le réseau dispose des informations suivantes :
- BSN = numéro de séquence de bloc,
- Etat (status) = Ack (accusé de réception positif), Nack (accusé de réception négatif) ou en attente,
- Référence de demande d'accusé de réception : nouveau champ comprenant le numéro de demande d'accusé de réception suivante (c'est-à-dire la première demande d'accusé de réception après la transmission du bloc BSN).

Le tableau précité pourra par exemple présenter les colonnes suivantes :

| | | |
|---|---|---|
| BSN | Etat (status) (Ack, Nack, en attente) | Référence de demande d'accusé de réception |

En outre, une table est nécessaire pour conserver la correspondance entre les numéros de demandes d'accusés de réception et les messages correspondants d'indication de l'état de réception ("Ack/Nack de liaison descendante de paquet"). Lorsque le réseau interroge la station mobile MS, en plus du bit "S/P", un second champ, RRBP (période de bloc réservée relative), également présent dans l'en-tête MAC, est utilisé. Ce champ permet d'allouer certaines ressources radio de liaison montante (un bloc radio de liaison montante) à la station MS dans lesquelles la station MS doit émettre le message "Ack/Nack de liaison descendante de paquet" requis.

De ce fait, le réseau peut garder la trace de la correspondance entre ce bloc radio de liaison montante (et de ce fait le message "Ack/Nack de liaison descendante de paquet" associé) et le numéro de demande d'accusé de réception. Alors, à chaque réception d'un message "Ack/Nack de liaison descendante de paquet", le réseau peut aisément récupérer le numéro de demande d'accusé de réception correspondant.

On notera qu'une telle table ou un tel tableau est généralement déjà présent dans le réseau GPRS et EGPRS (par exemple dans la couche MAC) dans d'autres buts (pour obtenir une indication de la ressource restante dans la liaison montante, pour savoir quand le message "Ack/Nack de liaison descendante de paquet" sera reçu, ...) et de ce fait seul un champ supplémentaire (numéro de demande d'accusé de réception) devra être ajouté à cette table existante pour constituer le tableau selon l'invention (une nouvelle table n'est donc pas nécessairement requise).

Une variable interne indiquant le numéro de demande d'accusé de réception en cours est nécessaire dans le réseau (pour chaque station MS ou éventuellement la même pour toutes les stations MS). Cette variable est initialisée (par exemple à 0) au moment de l'initialisation d'une liaison TBF et est incrémentée d'une unité à chaque fois qu'une demande d'accusé de réception est faite. Cette variable interne indique le numéro de la demande d'accusé de réception suivante.

A chaque fois qu'un bloc de données RLC est transmis, l'état de ce bloc passe à un état d'attente dans la liste V(B) (procédure déjà suivie dans le cadre du standard précité) et le numéro de demande d'accusé de réception en cours est indiqué pour ce bloc.

Lors de la réception d'un message "Ack/Nack de liaison descendante de paquet" depuis la station MS, le numéro de demande d'accusé de réception correspondant est récupéré par le réseau comme expliqué ci-dessus. Ainsi, après réception d'un message correspondant la demande d'accusé de réception n°i, seul l'état des blocs de la liste V(B) ayant un état "en attente" et un numéro de demande d'accusé de réception j ≤ i est mis à jour d'après les informations du message "Ack/Nack de liaison descendante de paquet".

Pour des blocs en attente ayant un numéro de demande d'accusé de réception j > i, les informations contenues dans le message "Ack/Nack de liaison descendante de paquet" ne sont pas pertinentes et doivent être ignorées, ce qui permet d'éviter les inconviénients de la solution existante précitée.

De manière à obtenir une complexité faible, le numéro de demande d'accusé de réception peut être mémorisé sur un petit nombre de bits, par exemple N=4 bits. Ceci signifie que le numéro de demande d'accusé de réception est périodique en présentant une période de 2^{N} (par exemple 16), c'est-à-dire que le numéro de demande d'accusé de réception 2^{N}-1 (par exemple 15) est suivi du numéro de demande d'accusé de réception 0.

L'inégalité "j ≥ i" ci-dessus est alors interprétée comme intégrant les deux variantes : (j < i et i -j ≥ 2^{N-1}) ou (j ≥ i et j-i < 2^{N-1}).

N doit être choisi suffisamment grand pour éviter les situations ambiguës c'est-à-dire lorsqu'il n'est pas possible de déterminer quelle est la demande d'accusé de réception la plus récente, la jème ou la ième demande d'accusé de réception) et suffisamment faible pour éviter de gaspiller de l'espace mémoire.

On notera que, dans les réseaux GPRS ou EGPRS par exemple, la couche RLC est normalement gérée par une unité de contrôle des paquets ("Packet Control Unit" = PCU) qui peut se trouver dans l'une quelconque des composantes suivantes de tels réseaux : une station de base BTS, un contrôleur de station de base BSC, ou un SGSN ("Serving GPRS Support Node").

Bien que décrit plus particulièrement dans le cadre de la transmission descendante entre un réseau (ensemble de stations de bases) et une pluralité de terminaux ou de stations mobiles, le procédé selon l'invention peut également être appliqué en transmission montante.

Cette implémentation peut être effective si chaque station mobile est en possession des informations suffisantes à cet effet (gestion du référencement des demandes d'accusés de réception), c'est-à-dire notamment si la station mobile peut savoir quand le réseau a émis les accusés de réception.

L'invention a également pour objet un réseau de radiocommunication comprenant une pluralité de stations mobiles, caractérisé en ce qu'il est adapté pour la mise en oeuvre du procédé de transmission par paquets en voie descendante décrit ci-dessus, ainsi qu'une station mobile ou portable faisant partie d'un tel réseau et adaptée pour la mise en oeuvre dudit procédé.

Bien entendu, l'invention n'est pas limitée au mode de réalisation décrit. Des modifications restent possibles, notamment du point de vue de la constitution des divers éléments ou par substitution d'équivalents techniques, sans sortir pour autant du domaine de protection de l'invention.

## Revendications

1. Procédé de transmission de données par paquets entre au moins deux entités par l'intermédiaire de trames comprenant un ou plusieurs bloc(s) de données, procédé dans lequel, au cours d'une transmission, l'entité émettrice adresse de manière répétée à la ou à chacune des entités réceptrices des demandes d'accusés de réception et retransmet, après réception par elle de la part d'une entité réceptrice d'un message d'indication de réception ou de non réception des différents blocs transmis précédemment par l'entité émettrice vers cette entité réceptrice, le ou les blocs dont la réception n'a pas été confirmée par ledit message, éventuellement ensemble avec de nouveaux blocs transmis pour la première fois, ces opérations étant répétées tout au long de chaque séquence de transmission et à chaque bloc transmis étant associé un champ d'indication de son état en réception, à savoir réception confirmée, réception non confirmée ou en attente de confirmation, procédé dans lequel ;
- à chaque bloc de données transmis par l'entité émettrice vers une entité réceptrice considérée est associée, en outre, une référence de demande d'accusé de réception et en ce que le champ d'indication de l'état en réception d'un bloc transmis donné n'est autorisé à être modifié, après réception d'un message d'indication de réception ou de non réception, que si la demande d'accusé de réception correspondante a été émise après la transmission ou retransmission du bloc considéré :
- on constitue, au niveau de l'entité émettrice, d'une part, un tableau d'état indiquant pour chaque bloc transmis son numéro de séquence ou sa référence, son état en réception et une référence de demande d'accusé de réception et, d'autre part, une table de correspondance entre lesdites références de demandes d'accusés de réception et les messages d'indication de réception ou de non réception,
- la référence de demande d'accusé de réception, qui, soit particulière à chaque station mobile ou entité réceptrice, soit commune à toutes les stations mobiles ou entités réceptrices en communication, consiste en une variable numérique indiquant le numéro de la prochaine demande, ladite variable numérique étant initialisée en début de chaque séquence de transmission par blocs et incrémentée d'une unité après chaque nouvelle demande d'accusé de réception émise par le réseau ou l'entité émettrice
- le champ réservé à la variable numérique contenant le numéro de demande d'accusé de réception comprend un nombre restreint n de bits, la comparaison entre le numéro extrait d'un message d'indication de l'état de réception et les numéros de demandes d'accusés de réception stockés dans le tableau d'état consistant en une comparaison modulo n.

2. Procédé selon la revendication 1, **caractérisé en ce qu'**il consiste, après chaque réception par le réseau ou l'entité émettrice d'un message d'indication de l'état de réception des blocs transmis émis par une station mobile ou entité réceptrice donnée, à determiner pour ledit message le numéro de la demande d'accusé de réception correspondante émise par le réseau ou l'entité émettrice, puis à comparer ledit numéro extrait aux numéros des demandes d'accusés de réception pour les blocs transmis dont l'état est mémorisé dans le tableau d'état et, à modifier, le cas échéant, uniquement les champs d'état des blocs dont le numéro de demande d'accusé de réception est supérieur ou égal audit numéro extrait, l'inégalité "j ≥ i" étant interprétée comme intégrant les deux variantes : j < i et j ≥ 2^{N-1} ou j ≥ i et j-i < 2^{N-1}.

3. Procédé selon l'une des revendications 1 ou 2, **caractérisé en ce que** l'entité émettrice est constituée par un réseau de radiocommunication et **en ce que** la ou les entité(s) réceptrice(s) est (sont) constituée(s) par un(e) ou plusieurs station(s) mobile(s) ou récepteur(s) portable(s).

4. Réseau de radiocommunication comprenant une pluralité de stations mobiles, **caractérisé en ce qu'**il est adapté pour la mise en oeuvre du procédé de transmission par paquets en voie descendante selon l'une quelconque des revendications 1 ou 2.

5. Station mobile ou portable, **caractérisé en ce qu'**elle est adaptée pour la mise en oeuvre du procédé selon l'une quelconque des revendications 1 ou 2 et **en ce qu'**elle appartient à un réseau selon la revendication 4.

## Claims

1. Method relating to packet data transmission between at least two entities by means of frames with one or more blocks of data, a method in which, during a transmission, the transmitting entity repeatedly addresses to each of the receiving entities requests for acknowledgements of receipt and retransmits, after receiving back from a receiving entity a message indicating receipt or non receipt of various blocks previously transmitted by the transmitting entity, the block(s) whose receipt has not been confirmed by said message, possibly together with new blocks transmitted for the first time, these operations being repeated throughout each transmission sequence and with a field indicating the receipt status associated with each transmitted block, namely receipt confirmed, receipt not confirmed or pending confirmation, method in which:
- each block of data transmitted by the transmitting entity towards a receiving entity involved is associated, in addition, with a reference to a request for acknowledgement of receipt and with the field indicating the receipt status of a given block of data transmitted which cannot be changed, after receiving a message indicating receipt or non receipt; unless the corresponding request for acknowledgment of receipt was transmitted after the transmission or retransmission of the block in question,
- at the transmitting entity, a status table is firstly established, indicating for each block transmitted its sequence number or its reference, its receipt status and a reference of the request for acknowledgement of receipt, and secondly, a table of correspondence between said references of requests for acknowledgement of receipt and messages indicating receipt or non receipt.
- the reference of the request for acknowledgement of receipt, which is specific to each mobiles station or receiving entity and common to all communicating mobile stations or receiving entities, consists of a numeric variable indicating the number of the next request, said numeric variable being initialized at the beginning of each transmission sequence by blocks and increased by one unit after each new request for acknowledgment of receipt transmitted by the network or transmitting entity.
- the field reserved for the numeric variable containing the number of the request for acknowledgement of receipt includes a limited number of bits, the comparison between the number extracted from a message indicating the receipt status, and the numbers of the requests for acknowledgment of receipt stored in the status table consisting of a modulo n comparison.

2. Method in accordance with claim 1, **characterized in that** it consists in, after each receipt by the network or transmitting entity of a message indicating the receipt status of the blocks transmitted by a given Mobile station or receiving entity, determining the corresponding number of the request for acknowledgment of receipt transmitted by the network or transmitting entity for said message, comparing said extracted number with the numbers of requests for acknowledgment of receipt for transmitted blocks whose status is stored in the status table, and modifying, where necessary, only the status fields of blocks whose number of request for acknowledgment of receipt is greater than or equal to said extracted number, the lack of equality "j ≥i" being interpreted as integrating the two variants : j < i and i-j ≥ 2^{N-1} or j ≥ i and j-i < 2^{N-1}

3. Method in accordance with one of claims 1 or 2, **characterized in that** the transmitting entity comprises a radiocommunications network and **in that** the receiving entity(ies) is/are constituted by one or more mobile stations or portable receivers.

4. Radiocommunications network comprising a plurality of mobile stations, **characterized in that** it is adapted to the implementation of the packet downlink transmission method in accordance with one of claims 1 or 2,

5. Mobile or portable station, **characterized in that** it is adapted to the implementation of the method in accordance with one of claims 1 or 2 and **in that** it is part of a network in accordance with claim 4.

## Patentansprüche

1. Verfahren zur Übertragung von Datenpaketen zwischen mindestens zwei Instanzen in Rahmen, welche einen oder mehrere Datenblöcke enthalten, wobei sendende Instanz während einer Übertragung wiederholt Empfangsbestätigungsabfragen an die empfangende Instanz oder an eine jede der empfangenden Instanzen sendet und, nachdem sie eine Empfangs- oder Nichtempfangsmeldenachricht für die verschiedenen zuvor von der sendenden Instanz an diese empfangende Instanz gesendeten Blöcke erhalten hat, den oder die Blöcke, dessen oder deren Empfang nicht von der besagten Nachricht bestätigt wurde, eventuell zusammen mit neuen, zum ersten Mal übertragenen Blöcken nochmals sendet, wobei diese Vorgänge während der gesamten Dauer einer jeden Sendesequenz wiederholt werden, und wobei einem jeden übertragenen Block ein Anzeigefeld seines Empfangszustands, d, h. Empfang bestätigt, Empfang nicht bestätigt oder in Erwartung der Bestätigung, zugeordnet wird, wobei:
- Jedem von der sendenden Instanz an eine bestimmte empfangende Instanz gesendeten Datenblock weiterhin eine Referenz der Empfangsbestätigungsabfrage zugeordnet wird und das Anzeigefeld für den Empfangszustand eines gegebenen gesendeten Blocks nach Empfang einer Meidenachricht über den Empfang oder den Nichtempfang nur geändert werden kann, wenn die entsprechende Empfangsbestätigungsabfrage nach der Übertragung oder der wiederholten Übertragung des bestimmten Blocks gesendet wurde,
- auf der Ebene der sendenden Instanz einerseits eine Zuslandstabelle, welche für jeden übertragenen Block die Sequenznummer oder die Referenz, den Empfangszustand und eine Referenz der Empfangsbestätigungsabfrage angibt, und andererseits eine Korrespondenztabelle zwischen den besagten Referenzen der Empfangsbestätigungsabfragen und den Meldenachrichten über den Empfang oder den Nichtempfang erstellt wird,
- die Referenz der Empfangsbestätigungsabfrage, welche entweder jeder Mobilstation oder empfangenden Instanz eigen oder allen sich in Kommunikation befindlichen Mobilstationen oder empfangenden Instanzen gemeinsam ist, aus einer numerischen Variablen besteht, welche die Nummer der nächsten Abfrage angibt, wobei die besagte numerische Variable am Anfang jeder Sendesequenz von Blöcken initialisiert wird und nach jeder neuen Empfangsbestätigungsabfrage, welche von dem Netzwerk oder von einer sendenden Instanz ausgegeben wird, um eine Einheit inkrementiert wird.
- das der numerischen Variablen vorbehaltene Feld, welches die Nummer der Empfangsbestätigungsabfrage enthält, eine beschränkte Anzahl n von Bits umfasst, wobei der Vergleich zwischen der aus einer Meldenachricht über den Empfangszustand extrahierte Nummer und den Nummern der Empfangsbestätigungsabfragen, welche in der Zustandstabelle gespeichert sind, aus einem Vergleich Modulo n besteht.

2. Verfahren nach Anspruch 1, **dadurch gekennzeichnet, dass** es darin besteht, nach jedem Empfang durch das Netzwerk oder der sendenden Instanz, einer Meldenachricht über den Empfangszustand der gesendeten Blöcke, welche von einer Mobilstation oder von einer gegebenen empfangenden Instanz ausgegeben wird" für die besagte Nachricht die entsprechende Nummer der von dem Netzwerk oder von der sendenden Instanz ausgegebenen Empfangsbestätigungsabfrage zu ermitteln und die besagte extrahierte Nummer anschließend mit den Nummern der Empfangsbestätigungsabfragen für die übertragenen Blöcke, deren Status in der Zustandstabelle gespeichert ist, und gegebenenfalls nur die Zustandsfelder der Blöcke, deren Empfangsbestätigungsabfrage-Nummer höher als oder gleich die besagte extrahierte Nummer ist, zu ändern, wobei die Ungleichheit "j ≥i" dahingehend interpretiert wird, dass sie die beiden Varianten: j < i und i - j ≥ 2^{N-1} oder j ≥ i und j - i < 2^{N-1} integriert.

3. Verfahren nach einem der Ansprüche 1 oder 2. **dadurch gekennzeichnet, dass** die sendende Instanz aus einem Funkkommunikationsnetzwerk besteht, und dass die empfangende(n) Instanz(en) aus einer oder mehreren Mobilstation(en) oder aus einem oder mehreren tragbaren Empfänger(n) besteht/bestehen.

4. Funkkommunikationsnetzwerk mit einer Vielzahl von Mobilstationen, **dadurch gekennzeichnet, dass** es für die Anwendung des Verfahrens zur Übertragung von Paketen in Abwärtsrichtung gemäß einem beliebigen der Ansprüche 1 oder 2 geeignet ist.

5. Mobile oder tragbare Station, **dadurch gekennzeichnet, dass** sie für die Anwendung des Verfahrens gemäß einem beliebigen der Anspruche 1 oder 2 geeignet ist, und dass sie einem Netzwerk gemäß Anspruch 4 angehört
